# FASCICULE DE BREVET EUROPEEN

(11) **EP 0 426 794 B1**
(45) Date de publication et mention de la délivrance du brevet: **16.06.1993**
(21) Numéro de dépôt: 90906782.9
(22) Date de dépôt: 10.05.1990
(51) Int. Cl.: B01D 33/19

(54) **CELLULE DE FILTRATION**
FILTRATIONSZELLE
FILTER CELL

(30) Priorité: 12.05.1989 BE 8900519
(43) Date de publication de la demande: 15.05.1991
(73) Titulaire: BIRD MACHINE INTERNATIONAL, INC., B-4130 Engis (BE)
(72) Inventeur: KUROWSKI, Serge, B-4121 Neupré (BE)
(74) Mandataire: Claeys, Pierre
(86) Numéro de dépôt international: BE9000020
(87) Numéro de publication internationale: WO9013348

(56) Documents cités:
- US-A- 3 216 576
- US-A- 3 389 800

## Description

La présente invention concerne une cellule de filtration, comprenant
- une cuve comportant une paroi de fond, des parois latérales s'étendant vers le haut à partir de la paroi de fond et une ouverture vers le haut,
- un lit filtrant plan supporté dans la cuve et divisant celle-ci en un compartiment supérieur pour la matière à filtrer et en un compartiment inférieur pour le filtrat,
- un orifice de sortie du filtrat prévu au bas d'une première des parois latérales susdites,
- la paroi de fond de la cuve comportant deux sections d'écoulement latérales, disposées de part et d'autre d'un chenal de drainage, de manière inclinée vers le bas en direction de celui-ci,
- le chenal de drainage ayant lui-même un fond incliné entre une extrémité haute et une extrémité basse, son extrémité basse débouchant en face de l'orifice de sortie.

On connaît déjà des cellules de ce genre, qui ont été décrites notamment dans le BE-A- 847088. Les cellules décrites dans ce document sont prévues pour être utilisées dans les filtres continus à surface de filtration horizontale. Ces cellules peuvent tourner en continu sur un carrousel et être, au cours de leur révolution, basculées sur leur axe. Ces dispositifs sont prévus notamment pour la filtration sous vide de boues industrielles.

Ces cellules améliorent déjà l'efficacité de l'évacuation du filtrat par rapport aux cellules antérieurement existantes (voir par exemple BE-A-768591). En effet, le chenal de drainage s'étend sur toute la longueur de la cellule et il est bordé sur toute sa longueur de deux plans inclinés formant le fond de la cellule. Comme ces cellules doivent pouvoir basculer, il est d'autre part important que le rapport entre la profondeur des cuves et la surface filtrante soit le plus réduit possible. Cela a pour effet qu'en pratique la pente du chenal de drainage est très faible, d'environ 1 à 2°. De plus, comme les pentes des plans inclinés sont dans une vue en plan, orientées à 180° l'une de l'autre, les forces d'écoulement ont tendance à s'annuler lorsque les filtrats atteignent le chenal de drainage. A l'extrémité haute de celui-ci, il y a donc une espèce de stagnation de l'écoulement, que la faible pente du chenal de drainage parvient difficilement à surmonter.

La présente invention a pour but d'améliorer les performances des cellules de filtration du type décrit au début, sans entraîner pour celles-ci d'autres inconvénients, et notamment des problèmes d'encombrement de l'appareil ou d'engorgement des conduites et sans altérer la surface filtrante des cellules.

Pour résoudre ces problèmes, on a prévu suivant l'invention une cellule de filtration du type décrit au début, dans laquelle la paroi de fond comprend une section d'extrémité qui est disposée de manière inclinée vers le bas entre une deuxième paroi latérale de la cuve, opposée à la première paroi latérale susdite, et l'extrémité haute du chenal de drainage.

Suivant une forme de réalisation de l'invention, la pente du fond du chenal de drainage est invariable. Suivant une variante de réalisation de l'invention le chenal de drainage comporte, du côté de son extrémité basse, un premier tronçon doté d'une pente inférieure à celle d'un deuxième tronçon, situé du côté de son extrémité haute. Suivant une autre forme de réalisation de l'invention, le fond du chenal de drainage ou respectivement du deuxième tronçon de celui-ci et la section d'extrémité de la paroi de fond de la cuve sont disposés dans un même plan ou, selon encore une autre variante, dans un plan différent.

Suivant une forme particulière de réalisation de l'invention, la section d'extrémité de la paroi de fond de la cuve est disposée dans un plan parallèle supérieur au fond du chenal de drainage ou respectivement du deuxième tronçon de celui-ci et l'extrémité haute du chenal de drainage est fermée par une paroi frontale qui s'étend vers le haut jusqu'au plan susdit.

Suivant une forme avantageuse de réalisation de l'invention, la section d'extrémité de la paroi de fond se trouve au- dessus d'un plan horizontal passant par le point haut de l'orifice de sortie.

Suivant encore une autre forme de réalisation de l'invention, la section d'extrémité de la paroi de fond de la cuve est raccordée à ladite deuxième paroi latérale de celle-ci dans un plan horizontal légèrement inférieur au lit filtrant plan.

Suivant une forme de réalisation préférée de l'invention les sections d'écoulement latérales présentent chacune une chicane qui dévie un écoulement de filtrat orienté transversalement à une partie du chenal de drainage, située à l'extrémité haute de ce dernier, de façon à diriger cet écoulement en oblique vers une partie de ce chenal située davantage en aval.

D'autres détails et particularités de l'invention ressortiront de la description donnée ci-après, à titre non limitatif et avec références aux dessins annexés.

La figure 1 représente une vue en plan, schématique, d'une cellule de filtration suivant l'invention.

La figure 2 représente une vue en coupe de cette cellule, suivant la ligne II-II de la figure 1.

Les figures 3 et 4 représentent des vues en section de cette cellule, suivant les lignes III-III et IV-IV de la figure 1.

La figure 5 représente une vue en plan d'une autre forme de réalisation de cellule de filtration suivant l'invention.

La figure 6 représente une vue en coupe de cette cellule, suivant la ligne VII-VII de la figure 5.

Sur les dessins, les éléments identiques ou analogues sont désignés par les mêmes références.

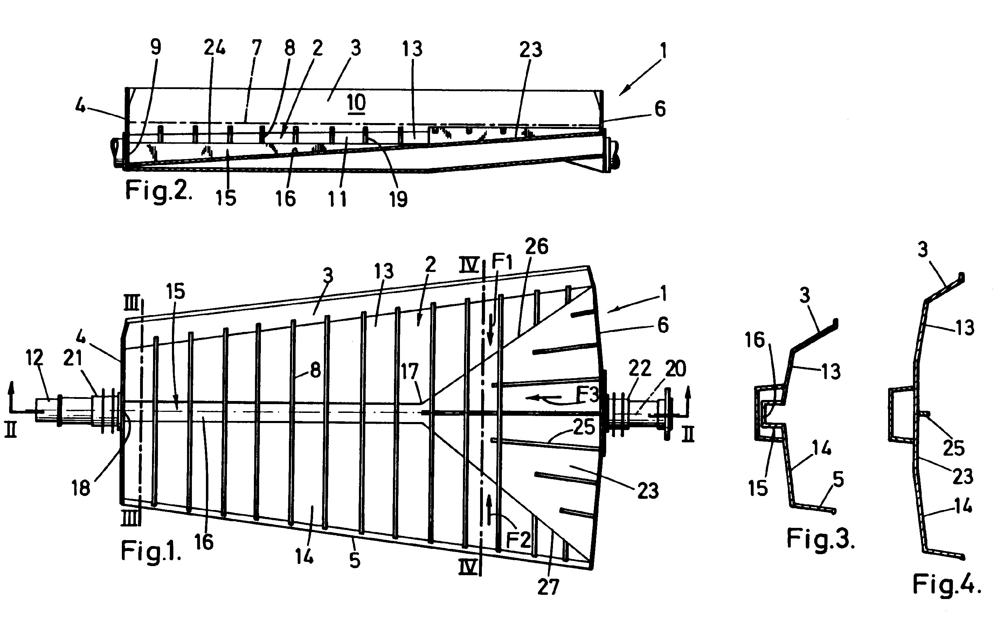

Ainsi qu'il ressort de la cellule de filtration représentée sur les figures 1 à 4, celle-ci comprend une cuve désignée par la référence générale 1 comportant une paroi de fond 2, des parois latérales 3 à 6 s'étendant vers le haut à partir de la paroi de fond 2 et une ouverture vers le haut. En plan, cette cellule a une forme approximativement trapézoïdale, ou de secteur de polygone, et cela parce qu'elle est prévue pour être disposée à côté d'autres cellules semblables en vue de former un appareil de filtration continu tournant à la manière d'un carrousel. De tels appareils sont connus et décrits par exemple dans les BE-A-768591 et BE-A-847088, cités précédemment. Il doit être entendu que la cellule suivant l'invention n'est limitée ni à cette forme, ni à l'utilisation dans un tel appareillage.

La cuve 1 d'une telle cellule de filtration contient un lit filtrant 7, représenté uniquement de manière schématique sur la figure 2 par une ligne en traits interrompus. Un tel lit filtrant est connu en soi (voir notamment les documents antérieurs précités) et il est généralement composé d'un treillis de support sur lequel repose une nappe en tissu filtrant. Le treillis de support est lui-même supporté de manière connue notamment par des nervures 8 qui s'étendent sensiblement transversalement à la cellule, et qui servent simultanément de raidisseurs.

Le lit filtrant 7 divise la cuve 1 en un compartiment supérieur 10 pour recevoir la matière à filtrer et un compartiment inférieur 11 pour le filtrat.

Ainsi qu'il ressort en particulier de la figure 2, un orifice de sortie 9 est prévu au bas de la paroi latérale 4, pour l'évacuation des filtrats par un conduit d'évacuation 12.

La paroi de fond de la cuve 1 comporte deux sections d'écoulement latérales 13 et 14, disposées de part et d'autre d'un chenal de drainage 15, de manière inclinée vers le bas en direction de celui-ci. Ces sections d'écoulement latérales 13 et 14 forment ainsi deux plans inclinés qui partent de la base des parois latérales 3 et 5 de la cuve et qui présentent chacune une pente orientée transversalement au chenal de drainage 15, cette pente pouvant être de 3 à 8°, de préférence de 4 à 6°.

Le chenal de drainage 15 présente lui-même un fond 16 incliné entre son extrémité haute 17 et son extrémité basse 18, qui débouche en face de l'orifice de sortie 9 décrit précédemment.

Enfin, au niveau du chenal de drainage 15, ainsi que latéralement à celui-ci, les nervures de support 8 du lit filtrant 7 présentent des ajours 19 (voir figure 2) qui permettent un passage des liquides dans le sens longitudinal de la cuve ainsi qu'éventuellement un passage de gaz.

La cellule représentée ici est prévue pour pouvoir être basculée autour d'un axe 20, en vue de l'élimination du gâteau de matière filtrée, à la fin du traitement. Deux paliers 21 et 22 supportent la cellule de manière à permettre son pivotement autour de cet axe. Le conduit d'évacuation 12 est raccordé à l'orifice 9 à travers l'un de ces paliers 21.

Suivant l'invention, la paroi de fond 2 comprend une section d'extrémité 23 qui est disposée de manière inclinée vers le bas entre la paroi latérale 6, opposée à la paroi 4 dotée de l'orifice de sortie 9, et l'extrémité haute 17 du chenal de drainage.

Cela signifie donc que le chenal de drainage ne s'étend plus, comme dans la technique antérieure, sur toute la longueur de la cellule de filtration. Il en résulte que, pour une même profondeur qu'auparavant du chenal de drainage, à son extrémité basse 18, le fond 16 du chenal présente une pente nettement plus forte pour une même longueur de cellule que les cellules antérieures et donc pour une même surface filtrante que celles-ci. En fonction de la longueur de cellule, on aura des pentes par exemple de 3 à 8°, de préférence de 5 à 6°.

D'autre part, dans la partie de la cellule située entre l'extrémité haute 17 du chenal de drainage 15 et la paroi latérale 6 de la cuve, il n'est plus nécessaire de border un chenal de drainage par des plans inclinés s'étendant transversalement à ce chenal. On peut par conséquent faire remonter largement la section d'extrémité 23 vers la paroi latérale 6 jusque dans un plan horizontal espacé de la distance minimale possible du lit filtrant 7. Cet agencement permet de conférer ainsi à cette section d'extrémité 23 une pente égale ou éventuellement supérieure à celle du fond du chenal de drainage 15. Il est évident qu'une pente inférieure de la section d'extrémité 23 peut aussi être envisagée, selon les besoins.

Dans l'exemple de réalisation illustré sur les figures 1 à 4, il ressort en particulier de la figure 2 que le fond du chenal de drainage 15 et la section d'extrémité 23 de la paroi de fond 2 sont disposés dans un même plan. Ils présentent donc, d'un bout à l'autre de la cellule, une même pente qui est aussi élevée que celle des sections d'écoulement latérales 13 et 14.

Dans cet exemple de réalisation, les bords supérieurs 24 du chenal de drainage 15 sont horizontaux et la hauteur de l'orifice de sortie 9 est approximativement égale ou inférieure à la profondeur du chenal 15. La section d'extrémité 23 de la paroi de fond 2 se trouve donc ainsi, dans cet exemple de réalisation, complètement au-dessus d'un plan horizontal passant par le point haut de l'orifice de sortie 9.

Ainsi qu'il ressort en particulier de l'exemple de réalisation illustré sur la figure 1, les pentes des sections d'écoulement latérales 13 et 14 suivent, dans une vue en plan, des sens mutuellement opposés, représentés par les flèches F₁ et F₂. La pente de la section d'extrémité 23 de la paroi de fond 2 a un sens, représenté par la flèche F₃, qui est orienté sensiblement à 90° par rapport aux pentes de sens F₁ et F₂ susdites.

Ainsi qu'il ressort en particulier des figures 1 et 2, les moyens de support du lit filtrant comprennent, outre les nervures transversales 8 décrites précédemment, des nervures longitudinales 25 situées sur la section d'extrémité 23 et orientées sensiblement dans le sens de la pente de celle-ci.

Le fonctionnement de la cellule de filtration qui vient d'être décrite est le suivant :

Après remplissage du compartiment supérieur 10 par de la boue qui doit être soumise à une séparation solide-liquide, le filtrat liquide s'écoule dans le compartiment inférieur 11, éventuellement avec application d'une dépression dans ce compartiment par des moyens connus en soi.

Sur les sections d'écoulement latérales 13 et 14 les liquides s'écoulent transversalement, suivant les sens F₁ et F₂, soit vers le chenal de drainage 15, soit vers la section d'extrémité 23 de la paroi de fond 2 de la cuve 1. Sur cette section d'extrémité 23 les liquides s'écoulent suivant le sens F₃, soit vers l'extrémité haute 17 du chenal de drainage 15, soit vers les sections d'écoulement latérales 13 et 14. Le long des arêtes 26 et 27, où la section d'extrémité 23 se raccorde aux sections d'écoulement latérales 13 et 14, les différents courants, dotés d'une vitesse d'écoulement sensiblement égales étant donné le même ordre de grandeur des pentes suivies, se recontrent sous un angle de 90°. Par conséquent, loin de s'annuler, ces courants poursuivent un écoulement dynamique en oblique en direction de l'extrémité 17, où ils pénètrent dans le chenal de drainage 15. Ici, non seulement les courants de filtrat pénètrent en ayant conservé pour une grande part leurs propriétés cinétiques, mais en outre ils s'introduisent dans un chenal de drainage dont la pente est d'aussi grande valeur que les plans inclinés formés par chacune des sections 13, 14 et 23 de la paroi de fond. Enfin, au fur et à mesure de l'avancement du liquide dans le chenal de drainage 15, l'énergie dynamique produite par la grande masse de liquide provenant du haut de la cellule est suffisante pour entraîner les liquides qui s'écoulent en sens opposés depuis les sections d'écoulement latérales 13 et 14.

Comme on peut le constater toutes les mesures prises favorisent un écoulement de liquides sans entrave du haut vers le bas de la cellule et elles permettent d'atteindre le plus rapidement possible un état où le conduit d'évacuation 12 absorbe à "bouche bée" les liquides, c'est-à-dire avec un débit maximal, cet état étant maintenu le plus longtemps possible.

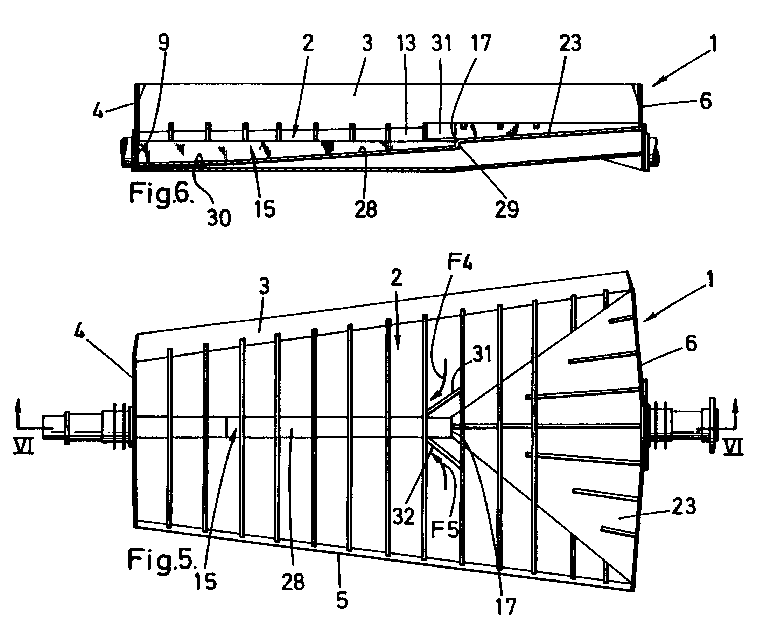

L'exemple de réalisation de cellule de filtration suivant l'invention, illustré sur les figures 5 et 6, se différencie du précédent par le fait qu'il présente quelques mesures supplémentaires pour empêcher un engorgement éventuel du haut du chenal de drainage 15. En effet, à son extrémité haute 17, celui-ci reçoit l'écoulement d'un quart à un tiers du filtrat passant à travers le lit filtrant 7.

Afin d'éviter au maximum tout risque de formation d'eau stagnante à un endroit de la cellule, on prévoit ici que la section d'extrémité 23 de la paroi de fond 2 de la cuve soit disposée dans un plan parallèle, supérieur au fond du chenal de drainage, et en tout cas au fond du tronçon 28 du chenal qui est situé du côté de l'extrémité haute 17 de celui-ci.

L'extrémité haute 17 du chenal est alors fermée par une paroi frontale 29 qui s'étend jusqu'à la section d'extrémité 23.

Cet abaissement brusque du fond du chenal de drainage permet à ce dernier d'absorber une plus grande quantité à la fois de liquide. Il est préférable de conserver dans la partie haute du chenal une inclinaison élevée de 3 à 9°, de préférence de 4 à 6°, en fonction de la longueur de la cellule. Pour que le fond reste malgré tout au-dessus du point bas de l'orifice de sortie 9, on prévoit un tronçon 30 à pente plus douce dans la partie inférieure du chenal 15. Ce tronçon sera aussi court que possible. Ici, l'entraînement par les masses de liquide venant du haut de la cellule est suffisant pour que l'écoulement ne soit pas influencé de manière défavorable par la pente douce de l'ordre de 1 à 3° du tronçon 30.

En outre, les sections d'écoulement latérales peuvent aussi présenter chacune une chicane 31 et 32. Ces chicanes dévient un écoulement orienté transversalement vers la partie du chenal de drainage 15 située à son extrémité haute 17, de façon à diriger cet écoulement en oblique (de la manière représentée par les flèches F₄ et F₅) vers une partie du chenal située davantage en aval. Elles contribuent ainsi à éviter une éventuelle stagnation des filtrats à l'extrémité 17 du chenal.

Un dispositif de filtrage rotatif selon le BE-A-847088 permet déjà un tour complet d'une cellule sur le carroussel en 2,5 minutes, ce qui représentait une grande amélioration par rapport à l'état de la technique, en particulier par la meilleure performance de la récolte du filtrat.

Un même dispositif muni de cellules suivant l'invention permet à présent un tour complet en 1,5 minute, sans perte de surface filtrante. Il faut aussi noter que les cellules suivant l'invention présentant les mêmes dimensions externes que les cellules antérieures sont applicables immédiatement sur les appareils existants, sans aucune sorte de modification.

Il doit être entendu que la présente invention n'est en aucune façon limitée aux formes de réalisation décrites ci-dessus et que bien des modifications peuvent y être apportées sans sortir de son cadre.

On peut par exemple imaginer que ces cellules aient une forme rectangulaire pour servir dans des appareils à déplacement linéaire des cellules. On peut aussi prévoir des cellules de ce genre, sans qu'elles ne doivent nécessairement basculer autour d'un axe.

On peut combiner différentes caractéristiques des formes de réalisation possibles au choix des besoins.

Il n'est d'autre part nullement exclu que les sections d'écoulement latérales et d'extrémité de la paroi de fond aient des formes différentes de celles décrites. On pourrait aussi imaginer un chenal de drainage à largeur croissante vers l'extrémité 17, ou à fond arrondi en section transversale.

On peut aussi prévoir l'agencement d'un ou de plusieurs organes de guidage prévus pour fractionner, orienter et répartir les fluides à leur entrée dans le chenal de drainage en des courants adjacents sensiblement parallèles. De tels organes de guidage ont par exemple été décrits dans le BE-A-847088.

On peut aussi imaginer une disposition asymétrique des sections d'écoulement 13 et 14 de part et d'autre du chenal de drainage 15. A l'extrême, un chenal de drainage accolé contre une des parois latérales 3 ou 5 et bordé d'une seule section d'écoulement latérale 13 ou 14 est compris dans le cadre de l'invention.

Enfin les chicanes 31 et 32 peuvent s'étendre entre plusieurs nervures 8 et pas seulement entre deux d'entre elles comme représenté sur les figures 5 et 6.

## Revendications

1. Cellule de filtration, comprenant
- une cuve (1) comportant une paroi de fond (2), des parois latérales (3 à 6) s'étendant vers le haut à partir de la paroi de fond et une ouverture vers le haut,
- un lit filtrant plan (7) supporté dans la cuve (1) et divisant celle-ci en un compartiment supérieur (10) pour la matière à filtrer et en un compartiment inférieur (11) pour le filtrat,
- un orifice de sortie (9) du filtrat prévu au bas d'une première (4) des parois latérales susdites,
- la paroi de fond (2) de la cuve comportant deux sections d'écoulement latérales (13, 14), disposées de part et d'autre d'un chenal de drainage (15), de manière inclinée vers le bas en direction de celui-ci,
- le chenal de drainage (15) ayant lui-même un fond incliné (16) entre une extrémité haute (17) et une extrémité basse (18), son extrémité basse débouchant en face de l'orifice de sortie (9),
caractérisé en ce que le paroi de fond (2) comprend une section d'extrémité (23) qui est disposée de manière inclinée vers le bas entre une deuxième paroi latérale (6) de la cuve, opposée à la première paroi latérale (4) susdite, et l'extrémité haute (17) du chenal de drainage (15).

2. Cellule de filtration suivant la revendication 1, caractérisée en ce que la pente du fond (16) du chenal de drainage (15) est invariable.

3. Cellule de filtration suivant la revendication 1, caractérisée en ce que le chenal de drainage (15) comporte, du côté de son extrémité basse (18), un premier tronçon (30) doté d'une pente inférieure à celle d'un deuxième tronçon (28), situé du côté de son extrémité haute (17).

4. Cellule de filtration suivant l'une des revendications 1 à 3, caractérisée en ce que le fond du chenal de drainage (15) ou respectivement du deuxième tronçon (28) de celui-ci et la section d'extrémité (23) de la paroi de fond (2) de la cuve (1) sont disposés dans un même plan.

5. Cellule de filtration suivant l'une des revendications 1 à 3, caractérisée en ce que le fond (16) du chenal de drainage (15) ou respectivement du deuxième tronçon (28) de celui-ci présente une pente différente de la pente de la section d'extrémité (23) de la paroi de fond (2) de la cuve (1).

6. Cellule de filtration suivant l'une des revendications 1 à 3, caractérisée en ce que la section d'extrémité (23) de la paroi de fond (2) de la cuve (1) est disposée dans un plan parallèle, supérieur au fond du chenal de drainage (15) ou respectivement du deuxième tronçon (28) de celui-ci et en ce que l'extrémité haute (17) du chenal de drainage (15) est fermée par une paroi frontale (29) qui s'étend vers le haut jusqu'au plan susdit.

7. Cellule de filtration suivant l'une quelconque des revendications 1 à 6, caractérisée en ce que les deux sections d'écoulement latérales (13, 14) ont une pente de 3 à 8°, la section d'extrémité (23) de la paroi de fond (2) et le fond du chenal de drainage (15) ont également une pente de 3 à 8°, de préférence de 4 à 6°, en fonction de la longueur de la cellule.

8. Cellule de filtration suivant l'une quelconque des revendications 3 à 6, caractérisée en ce que les deux sections d'écoulement latérales (14, 14) ont une pente de 3 à 8°, la section d'extrémité (23) de la paroi de fond (2) et le fond du deuxième tronçon (28) du chenal de drainage (15) ont une pente de 3 à 8°, de préférence de 4 à 6° en fonction de la longueur de la cellule, et en ce que le fond du premier tronçon (30) du chenal de drainage (15) a une pente de 1 à 2°.

9. Cellule de filtration suivant l'une quelconque des revendications 1 à 8, caractérisée en ce que la section d'extrémité (23) de la paroi de fond (2) se trouve au-dessus d'un plan horizontal passant par le point haut de l'orifice de sortie (9).

10. Cellule de filtration suivant l'une quelconque des revendications 1 à 9, dans laquelle les pentes des sections d'écoulement latérales (13, 14) suivent, dans une vue en plan, des sens mutuellement opposés, caractérisée en ce que la pente de la section d'extrémité (23) de la paroi de fond (2) a un sens orienté sensiblement à 90° par rapport aux pentes susdites.

11. Cellule de filtration suivant l'une quelconque des revendications 1 à 10, caractérisée en ce que la section d'extrémité (23) de la paroi de fond (2) de la cuve (1) est raccordée à ladite deuxième paroi latérale (6) de celle-ci dans un plan horizontal légèrement inférieur au lit filtrant plan (7).

12. Cellule de filtration suivant l'une quelconque des revendications 1 à 11, caractérisée en ce que les sections d'écoulement latérales (13, 14) présentent chacune une chicane (31, 32) qui dévie un écoulement de filtrat orienté transversalement à une partie du chenal de drainage (15), située à l'extrémité haute (17) de ce dernier, de façon à diriger cet écoulement en oblique vers une partie de ce chenal située davantage en aval.

## Patentansprüche

1. Filtrationszelle mit
- einem Behälter (1), der eine Bodenwand (2), seitliche Wände (3 bis 6), die sich ab der Bodenwand nach oben erstrecken und eine nach oben gerichtete Öffnung aufweist,
- einem flachen Filtrationsbett (7), das in dem Behälter (1) gehalten wird und ihn in einen größeren Teil (10) für die zu filternde Masse und in einen kleineren Teil (11) für das Filtrat unterteilt,
- einer Ausgangsöffnung (9) des Filtrats, die unterhalb einer ersten (4) der oben genannten seitlichen Wände vorgesehen ist,
- wobei die Bodenwand (2) des Behälters zwei seitliche Abflußabschnitte (13, 14) aufweist, die beiderseits eines Drainagekanals (15) vorgesehen sind und in dessen Richtung schräg nach unten verlaufen,
- wobei der Drainagekanal (15) seinerseits einen schrägen Boden (16) zwischen einem oberen Ende (17) und einem unteren Ende (18) aufweist, wobei das untere Ende gegenüber der Ausgangsöffnung (9) endet,
dadurch gekennzeichnet, daß
die Bodenwand (2) einen Endabschnitt (23) aufweist, der nach unten abgeschrägt zwischen einer zweiten seitlichen Wand (6) des Behälters, der oben genannten ersten seitlichen Wand (4) gegenüber, und dem oberen Ende (17) des Drainagekanals (15) vorgesehen ist.

2. Filtrationszelle nach Anspruch 1, dadurch gekennzeichnet, daß die Neigung des Bodens (16) des Drainagekanals (15) unveränderlich ist.

3. Filtrationszelle nach Anspruch 1, dadurch gekennzeichnet, daß der Drainagekanal (15) seitlich seines unteren Endes (18) einen ersten Teilabschnitt (30) aufweist, der eine geringere Neigung besitzt ist als die eines zweiten Teilabschnitts (28), der seitlich seines oberen Endes (17) angeordnet ist.

4. Filtrationszelle nach einem der Ansprüche 1 bis 3, dadurch gekennzeichnet, daß der Boden des Drainagekanals (15) bzw. dessen zweiten Teilabschnitts (28) und der Endabschnitt (23) der Bodenwand (2) des Behälters (1) sich auf einer Ebene befinden.

5. Filtrationszelle nach einem der Ansprüche 1 bis 3, dadurch gekennzeichnet, daß der Boden (16) des Drainagekanals (15) bzw. dessen zweiten Teilabschnitts (28) eine andere Neigung aufweisen als die Neigung des Endabschnitts (23) der Bodenwand (2) des Behälters (1).

6. Filtrationszelle nach einem der Ansprüche 1 bis 3, dadurch gekennzeichnet, daß der Endabschnitt (23) der Bodenwand (2) des Behälters (1) in einer Ebene parallel oberhalb des Bodens des Drainagekanals (15) bzw. dessen zweiten Teilabschnitts (28) angeordnet ist und dadurch, daß das obere Ende (17) des Drainagekanals (15) mittels einer Stirnwand (29), die sich bis zur oben genannten Ebene nach oben erstreckt, geschlossen ist.

7. Filtrationszelle nach einem der Ansprüche 1 bis 6, dadurch gekennzeichnet, daß die beiden seitlichen Abflußabschnitte (13, 14) eine Neigung von 3 bis 8°, der Endabschnitt (23) der Bodenwand (2) und des Bodens des Drainagekanals (15) ebenfalls eine Neigung von 3 bis 8°, vorzugsweise 4 bis 6°, in Abhängigkeit von der Länge der Zelle aufweisen.

8. Filtrationszelle nach einem der Ansprüche 3 bis 6, dadurch gekennzeichnet, daß die beiden seitlichen Abflußabschnitte (13, 14) eine Neigung von 3 bis 8°, der Endabschnitt (23) der Bodenwand (2) und der Boden des zweiten Teilabschnitts (28) des Drainagekanals (15) eine Neigung von 3 bis 8°, vorzugsweise von 4 bis 6°, in Abhängigkeit von der Länge der Zelle aufweisen und dadurch, daß der Boden des ersten Teilabschnitts (30) des Drainagekanals (15) eine Neigung von 1 bis 2° aufweist.

9. Filtrationszelle nach einem der Ansprüche 1 bis 8, dadurch gekennzeichnet, daß der Endabschnittt (23) der Bodenwand (2) sich unterhalb einer horizontalen Ebene befindet, die durch den oberen Punkt der Ausgangsöffnung (9) verläuft.

10. Filtrationszelle nach einem der Ansprüche 1 bis 9, bei der die Neigungen der seitlichen Abflußabschnitte (13, 14) in Draufsicht einander entgegengesetzten Richtungen folgen, dadurch gekennzeichnet, daß die Neigung des Endabschnitts (23) der Bodenwand (2) eine Richtung aufweist, die bezüglich der obengenannten Neigungen im wesentlichen unter 90° verläuft.

11. Filtrationszelle nach einem der Ansprüche 1 bis 10, dadurch gekennzeichnet, daß der Endabschnitt (23) der Bodenwand (2) des Behälters (1) sich an dessen zweite seitliche Wand (6) in einer horizontalen Ebene kurz unterhalb des flachen Filtrationsbettes (7) anschließt.

12. Filtrationszelle nach einem der Ansprüche 1 bis 11, dadurch gekennzeichnet, daß die seitlichen Abflußabschnitte (13, 14) jeweils eine Schikane (31, 32) aufweisen, die einen Abfluß des Filtrats quer zu einem Teil des Drainagekanals (15) umleitet und die sich am oberen Ende (17) des letzteren befindet, um so diesen Abfluß schräg gegen einen Teil des Kanals, der sich mehr stromabwärts befindet, zu leiten.

## Claims

1. Filtering cell, comprising
- a tank (1) comprising a base wall (2), lateral walls (3 to 6) extending upwards from the base wall and an upwardly facing opening,
- a plane filter bed (7) supported in the tank (1) and dividing the latter into an upper compartment (10) for the substance to be filtered and a lower compartment (11) for the filtrate,
- an outlet orifice (9) for the filtrate, provided at the bottom of one (4) of the abovementioned lateral walls,
- the base wall (2) of the tank comprising two lateral flow-off sections (13, 14) arranged on either side of a drainage channel (15) and inclined downwards towards the latter,
- the drainage channel (15) itself having a base (16) inclined between a top end (17) and a bottom end (18), its bottom end opening out opposite the outlet orifice (9),
characterized in that the base wall (2) comprises an end section (23) which is arranged inclined downwards between a second lateral wall (6) of the tank, opposite the first abovementioned lateral wall (4), and the top end (17) of the drainage channel (15).

2. Filtering cell according to Claim 1, characterized in that the slope of the base (16) of the drainage channel (15) is invariable.

3. Filtering cell according to Claim 1, characterized in that the drainage channel (15) comprises, on the side of its bottom end (18), a first length (30) provided with a slope less than that of a second length (28) situated on the side of its top end (17).

4. Filtering cell according to one of Claims 1 to 3, characterized in that the base of the drainage channel (15) or of the second length (28) of the latter respectively and the end section (23) of the base wall (2) of the tank (1) are arranged in a same plane.

5. Filtering cell according to one of Claims 1 to 3, characterized in that the base (16) of the drainage channel (15) or of the second length (28) of the latter respectively has a slope different from the slope of the end section (23) of the base wall (2) of the tank (1).

6. Filtering cell according to one of Claims 1 to 3, characterized in that the end section (23) of the base wall (2) of the tank (1) is arranged in a parallel plane above the base of the drainage channel (15) or of the second length (28) of the latter respectively, and in that the top end (17) of the drainage channel (15) is closed by a front wall (29) which extends upwards as far as the abovementioned plane.

7. Filtering cell according to any one of Claims 1 to 6, characterized in that the two lateral flow-off sections (13, 14) have a slope of 3 to 8°, the end section (23) of the base wall (2) and the base of the drainage channel (15) also having a slope of 3 to 8°, preferably 4 to 6°, depending on the length of the cell.

8. Filtering cell according to any one of Claims 3 to 6, charaterized in that the two lateral flow-off sections (13, 14) have a slope of 3 to 8°, the end section (23) of the base wall (2) and the base of the second length (28) of the drainage channel (15) having a slope of 3 to 8°, preferably 4 to 6°, depending on the length of the cell, and in that the base of the first length (30) of the drainage channel (15) has a slope of 1 to 2°.

9. Filtering cell according to any one of Claims 1 to 8, characterized in that the end section (23) of the base wall (2) is situated above a horizontal plane passing through the top point of the outlet orifice (9).

10. Filtering cell according to any one of Claims 1 to 9, in which the slopes of the lateral flow-off sections (13, 14) follow, in a plan view, mutually opposite directions, characterized in that the slope of the end section (23) of the base wall (2) has a direction oriented substantially at 90° relative to the abovementioned slopes.

11. Filtering cell according to any one of Claims 1 to 10, characterized in that the end section (23) of the base wall (2) of the tank (1) is connected to the said second lateral wall (6) of the latter in a horizontal plane slightly below the plane filter bed (7).

12. Filtering cell according to any one of Claims 1 to 11, characterized in that the lateral flow-off sections (13, 14) each have a baffle (31, 32) which deviates a transversely oriented flow of filtrate to a part of the drainage channel (15) situated at the top end (17) of the latter, so as to direct this flow obliquely towards a part of this channel situated further downstream.
